# EUROPEAN PATENT SPECIFICATION

(11) **EP 0 307 234 B1**
(45) Date of publication and mention of the grant of the patent: **13.01.1993**
(21) Application number: 88308364.4
(22) Date of filing: 09.09.1988
(51) Int. Cl.: B01D 27/00, B01D 27/04, B01D 39/16, B29C 65/00, B29C 65/18

(54) **Process for producing a filter element**
Herstellung eines Filterelements
Procédé de production d'un élément filtrant

(30) Priority: 10.09.1987 JP 226954/87
(43) Date of publication of application: 15.03.1989
(73) Proprietor: Chisso Corporation, Osaka-shi Osaka-fu (JP)
(72) Inventor: Ogata, Satoshi, Moriyama-shi Shiga-ken (JP); Hane, Teruaki, Yasu-gun Shiga-ken (JP); Tanoue, Kozo, Yasu-gun Shiga-ken (JP)
(74) Representative: Lamb, John Baxter

(56) References cited:
- EP-A- 0 175 432
- EP-A- 0 201 991
- WO-A-85/05286
- DD-A- 82 119
- DE-A- 3 006 021
- DE-B- 2 356 353
- US-A- 4 120 711

## Description

This invention relates to a process for producing a filter element. More particularly it relates to a process for producing a filter element for precision filtration obtained by molding collected mass of synthetic fibers into a hollow body.

A conventional cartridge filter element has a hollow form opened at both the ends thereof and comprises porous materials such as collected mass of fibers, which is called "depth-type" hereinafter. Such conventional depth type cartridge filter elements are for example described in WO-A-85/052 86 and EP-A-0 175 432. Fig. 3 shows a cross-sectional view of a conventional depth type cartridge filter element provided in a housing. In the case where water to be treated A is filtered with such a filter element, a filter element 4 is set to the inside of a housing 2, followed by pressurizing a fluid to be treated A into the housing 2 and causing the fluid to penetrate from the outside of the filter element toward the inside thereof. At a lower part and an upper part inside the housing 2 are provided projections (housing-sealing parts) 2A for fixing the filter element 4 and sealing it. The treated fluid B subjected to filtration treatment during penetration through the inside of filter element is taken out from one end of the housing 2 to the outside of the system.

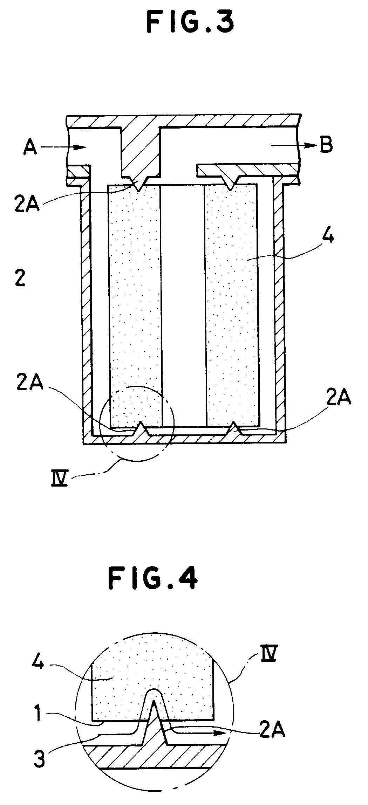

In order to make full use of filterability of the filter element, it is desired that the end surface 1 of the filter element 4 be completely sealed relative to the housing 2, but actually the sealability of the filter element relative to the housing is inferior so that the expected filterability cannot often be obtained. For example, in Fig. 4 showing a partly enlarged cross-section of the IV part (the sealing part of the filter relative to the housing) in Fig. 3, the fluid to be treated A having intruded from the end face 1 of the filter element 4 makes a detour around the housing-sealing part 2A and passes through the shortest flow path 3 where the pressure loss is minimum to thereby damage the filtration accuracy of the depth type cartridge filter. In order to prevent the fluid from passing through such a shortest flow path, it has been tried to bond a preliminarily molded end cap or punched sheet-like material onto the end surface of the filter element with an adhesive or a hot-melt adhesive.

According to such a process, however, there are drawbacks that it is difficult to control the quantity of the adhesive or hot-melt adhesive adhered at the time of the bonding, or if the adhesive or the like penetrates too deeply into the end surface, the filtration area of the filter is reduced to lower its filterability. Further, there is a problem that hands of workers or the filter is liable to become dirty with the adhesive or the like at the time of bonding operation.

### SUMMARY OF THE INVENTION

The object of the present invention is to provide a process for producing a filter element which makes it possible to simply and efficiently seal the end surfaces of the filter element without relying on conventional use of adhesives which require control of the quantity of the adhesives adhered and cause dirt.

The present invention resides in;
a process for producing a filter element having a hollow body composed of hot-melt adhesive, sheath-core composite, thermoplastic synthetic fibers and having each of its end surfaces sealed, which process comprises placing on a hot plate as a heat source, provided with a layer of a thermally conductive and releasing surface material, in succession, a thermoplastic sheet and a filter element so that an end surface of said filter element is contacted with said thermoplastic sheet and heat-bonding the end surface of said filter element to said thermoplastic sheet, and repeating the operation for the other end surface of the filter.

### BRIEF DESCRIPTION OF THE DRAWINGS

Fig. 1 shows a side view illustrating an embodiment of a process for producing a filter element according to the present invention.

Fig. 2 shows a partial cross-section illustrating an anchor effect in the case where a thermoplastic sheet in the present invention has been melted.

Fig. 3 shows a cross-section illustrating the state where a conventional depth type cartridge filter element is set to the inside of a housing.

Fig. 4 shows a partly enlarged cross-section of the encircled IV part in Fig. 3.

### DETAILED DESCRIPTION OF PREFERRED EMBODIMENTS

Examples of the thermoplastic synthetic fibers constituting the cartridge filter element (hereinafter referred to filter element) usable in the present invention are polyolefin fibers, polyamide fibers, polyester fibers, acrylic fibers, hot-melt adhesive composite fibers obtained by combining the fiber components of the foregoing fibers, etc. These must be hot-melt adhesive composite fibers.

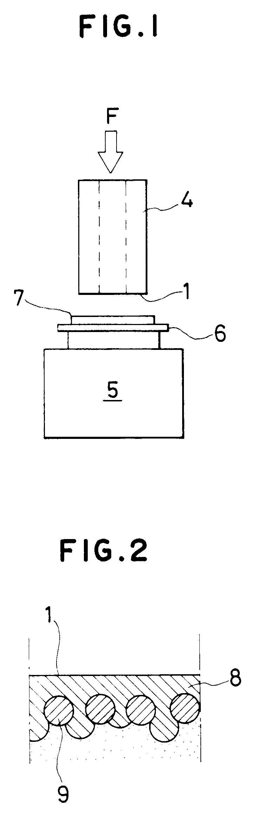

Further, the thermoplastic sheet usable in the present invention is preferred to be of the same component as or a similar component to the synthetic fiber component (particularly to the sheath component of the fibers) constituting the filter element, but the sheet may be those composed of a component having a lower melting point than that of the component constituting the filter element. The thermoplastic sheet and the end surface of the filter element are heat-bonded such that at least a portion of the sheet is melted by the heat generated by the hot plate as a heat source and adhered onto the end surface of the filter element. When the melting point of the component of the thermoplastic sheet is lower than those of the respective components constituting the filter element, the molten part 8 of the sheet flows between the surface layer fibers 9 of the end surface of the filter, as shown in Fig. 2, and cools and solidifies at this state as it is, so that the thermoplastic sheet is more firmly adhered onto the end surface of the filter element due to an anchor effect.

The thermoplastic sheet is heat-bonded to the end surface of the filter element to seal this part, and on the other hand, when the element is set to the housing of the filtration apparatus, the other surface of the material is contacted tightly onto the inner wall of the housing (or the projected sealing part thereof) to seal so as to prevent the short pass of the water to be treated. Thus, the thermoplastic sheet is preferred to have a suitable thickness for affording cushioning characteristics as well as hot-melt adhesive properties, and a shape stability. This thickness varies depending on the size of the filter element, but it is generally 100 µm to 2 mm, preferably 100 µm to 1 mm. In the case where the cushioning characteristics are more required, it is also possible to use a composite sheet having the thermoplastic sheet combined with an elastic sheet such as rubber sheet.

Further as to the terms "provided with a layer of a thermally conductive and releasing surface material" referred to herein, there is meant a thermally conductive and releasing surface coating integrally provided on the hot plate or a thermally conductive and releasing film interposed between the hot plate and the said thermoplastic film.

The substance forming such a surface material may be those composed of a component which is thermally unchanged or very slightly changed at the melting point of the above thermoplastic sheet. Examples of such a film-form material are cellophane film, polytetrafluoroethylene sheet, polyester sheet, silicone membrane, etc., and these materials may be provided integrally with the hot plate, as described above.

Next, the present invention will be described referring to the accompanying drawings. Fig. 1 shows a side view illustrating a filter element to be placed on a hot plate according to a process of the present invention. In this figure, a film having a thermal conductivity and release characteristics 6 (hereinafter referred to release film) is placed on a hot plate 5, followed by placing on the release film 6, a thermoplastic sheet 7 cut to a size somewhat larger than that of the outer diameter of a filter element 4, pressing these materials under a load of F, removing the load after confirmation of the resulted adhesion, cutting off an excess part of the sheet relative to the end surface of the element by means of a cutter and allowing these materials to cool down. The confirmation of the adhesion is experientially carried out referring to the heating temperature of the hot plate, the load and the loading time.

The filter element produced as above-described is set to the inside of the housing 2 as shown in Fig. 3. The end surface of the element is bonded onto the thermoplastic sheet by hot-melt adhesion; hence even if projections 2A of the housing 2 for sealing are not provided, the end surface of the filter element 4 is closely contacted onto the inner wall of the housing 2 due to the cushioning effect of the thermoplastic sheet itself to enhance the sealing effect, and further, since the thermoplastic sheet is heat-bonded onto the end surface of the filter element 4, the fluid to be treated does not form the shortest flow path at this part and hence does not flow therein.

The present invention will be described in more detail by way of Examples.

### Example 1

A cellophane film of 50 µm thick as a release film was laid on a hot plate equipped with a temperature controller and set to 175°C, followed by placing thereon a low density polyethylene sheet of 150 µm thick having a melting point of 135°C, placing, after 5 seconds, thereon a cartridge filter element (inner diameter 30 mm, outer diameter 68 mm and length 250 mm), the end surface of which being placed on the sheet, molded from hot-melt adhesive composite fibers (ES fiber (trademark of product by Chisso Corporation); core component: polypropylene, sheath component: low density polyethylene, (2.0.10⁻⁶ kg/m (18 deniers)), pressing these materials under a levelled load of 2 kg/cm² for 10 seconds, heat-bonding the end surface of the filter element to the polyethylene sheet and also heat-bonding the other end surface in the same manner to prepare a cartridge filter element of the present invention. This element was then set to the inside of a filtration apparatus as shown in Fig. 3, followed by passing an aqueous suspension to be treated which was obtained by adding a carborundum powder (having a particle size distribution of 20 to 70 µm to water (the concentration of the suspension: 400 ppm) and agitating these materials, through the element in an amount of the suspension passed of 2,000 ℓ per hour. The filtrate (100 mℓ) having passed through the filter was collected, followed by passing through a filter paper by suction filtration to collect particles and measuring the particle size of the particles. Further, the concentration of the filtrate after continuation filtration for 5 minutes was measured to calculate the percentage removal. The results are shown in Table 1.

### Comparative example 1

Using a filter element prepared in the same manner as in Example 1 except that the end surface of the resulting cartridge filter element was not sealed, filtration was carried out in the same manner as in Example 1, followed by measuring the particle size and concentration of the resulting filtrate to calculate the percentage removal. The results are shown in Table 1.

**Table 1**

| | Sealing of end surface | Maximum diameter of particles flown out (µm) | Concentration of dispersion to be treated (ppm) | Concentration of filtrate (ppm) | Percentage removal (%) |
|---|---|---|---|---|---|
| Example 1 | Yes | 52 | 400 | 8 | 98 |
| Comp. ex. 1 | No | 69 | 400 | 9 | 80 |

### Example 2

Filtration was carried out in the same manner as in Example 1 except that a cartridge filter element molded from composite fibers (polyester fibers) the sheath component of which had a melting point of 180° to 185°C was used, followed by measuring the particle size and concentration of the resulting filtrate. The results are shown in Table 2.

### Comparative example 2

Filtration was carried out in the same manner as in Example 2 except that the end surface of the cartridge filter element was not sealed, followed by measuring the particle size and concentration of the resulting filtrate. The results are shown in Table 2.

**Table 2**

| | Sealing of end surface | Maximum diameter of particles flown out (µm) | Concentration of dispersion (ppm) | Concentration of filtrate (ppm) | Percentage removal (%) |
|---|---|---|---|---|---|
| Example 1 | Yes | 51 | 400 | 7 | 98 |
| Comp. ex. 2 | No | 68 | 400 | 75 | 81 |

As apparent from the results of the above Examples, the filter element produced according to the present invention is superior in the sealing effect to afford a high percentage removal.

In addition, the low density polyethylene sheet used in the above Examples had a thickness of 150 µm. When the thickness was less than e.g. 100 µm, breakage or wrinkles due to heat shrinkage were liable to be formed, while when it exceeded 300 µm, the end surface hardened to reduce cushioning characteristics and also form clearances between the sealing part of the housing and the filter element so that reduction in the filtration effect was observed.

The cartridge filter element produced according to the present invention makes it possible to simply and efficiently prevent the fluid to be treated from passing through the shortest flow path along the end surface and also for example if another material layer is provided as media within the filtration layer of the filter, it is possible to prevent the fluid from the end surface, from its detour around the media and its leakage. Further, when the cartridge filter element is produced, no adhesive or the like is used; hence neither hand of worker nor filter element is dirtied and also no contamination of the filter element occurs so that dissolving-out of contaminants into the filtrate does not occur.

## Claims

1. A process for producing a filter element having a hollow body composed of hot-melt adhesive sheath-core composite, thermoplastic synthetic fibers and having each of its end surfaces sealed, which process comprises placing on a hot plate (5), provided with a layer of a thermally conductive and releasing surface material (6), in succession, a thermoplastic sheet (7) and a filter element (4) so that an end surface of the filter element contacts the thermoplastic sheet and heat-bonding the end surface of the filter element to the thermoplastic sheet, and repeating the operation for the other end surface of the filter.

2. A process according to Claim 1, in which the thermoplastic sheet is composed of the same, or a similar, component as the sheath component of the hot-melt adhesive composite fibers.

3. A process according to Claim 1, in which the melting point of the thermoplastic sheet is below the melting point of the thermoplastic synthetic fibers.

4. A process according to Claim 1, in which the thermoplastic synthetic fibers are selected from polyolefin fibers, polyamide fibers, polyester fibers, acrylic fibers, and hot-melt adhesive composite fibers composed of those fibers.

5. A process according to Claim 1, in which the thermoplastic sheet is composed of the same component as the synthetic fiber component.

6. A process according to any one of the preceding Claims, in which the thermoplastic film has a thickness of from 100 µm to 2 mm.

7. A process according to any one of the preceding Claims, in which the releasing surface material is a cellophane film, polytetrafluoroethylene sheet, polyester sheet or silicone membrane.

8. A process according to Claim 1, in which the thermoplastic fibers are hot-melt adhesive composite fibers composed of polypropylene and low density polyethylene, and the thermoplastic sheet is composed of low density polyethylene.

## Patentansprüche

1. Ein Verfahren zur Herstellung eines Filterelements, das einen Hohlkörper aufweist, der aus thermoplastischen Hitzeschmelzklebstoff-Mantelkern-Chemiefasern besteht, und bei dem jede seiner Endflächen versiegelt ist, wobei dieses Verfahren die Aufbringung - nacheinander - einer thermoplastischen Folie (7) und eines Filterelements (4) auf einer mit einer Schicht aus einen wärmeleitfähigen- und freigebenden Oberflächenmaterial (6) versehenen Heizplatte (5) in einer solchen Weise umfaßt, daß eine Endfläche des Filterelements die thermoplastische Folie berührt und die Endfläche des Filterelements mit der thermoplastischen Folie heißverklebt, und die Wiederholung des Arbeitsvorgangs für die andere Endfläche des Filters.

2. Ein Verfahren nach Anspruch 1, in den die thermoplastische Folie aus derselben oder einer ähnlichen Komponente besteht wie die Mantelkomponente der Hitzeschmelzklebstoff-Verbundfasern.

3. Ein Verfahren nach Anspruch 1, in dem der Schmelzpunkt der thermoplastischen Folie unter dem Schmelzpunkt der thermoplastischen Chemiefasern liegt.

4. Ein Verfahren nach Anspruch 1, in dem die thermoplastischen Chemiefasern aus Polyolefinfasern, Polyamidfasern, Polyesterfasern, Acrylfasern und aus diesen Fasern zusammengesetzten Hltzeschmelzklebstoff-Verbundfasern bestehen.

5. Ein Verfahren nach Anspruch 1, in dem die thermoplastische Folie aus derselben Komponente wie die Chemiefaserkomponente besteht.

6. Ein Verfahren nach einem der vorhergehenden Ansprüche, in dem der thermoplastische Film eine Dicke von 100 µm bis 2 mm hat.

7. Ein Verfahren nach einen der vorhergehenden Ansprüche, in dem das freigebende Oberflächenmaterial ein Cellophanfilm, Polytetrafluoräthylenfolie, Polyesterfolie oder eine Silikonmembrane ist.

8. Ein Verfahren nach Anspruch 1, in dem die thermoplastischen Fasern Hitzeschmelzklebstoff-Verbundfasern bestehend aus Polypropylen und Polyäthylen niederer Dichte sind und die thermoplastische Folie aus Polyäthylen niederer Dichte besteht.

## Revendications

1. Un procédé de production d'un élément filtrant ayant un corps creux composé de fibres synthétiques thermoplastiques composites adhésives par thermo-fusion formant un manchon central et ayant chacune de ses extrémités scellée, lequel procédé comprend la mise en place sur une plaque chauffante (5) munie d'une couche d'un matériau thermoconducteur et de décollage (6), successivement, d'une feuille thermoplastique (7) et d'un élément filtrant (4) de telle manière qu'une surface de l'extrémité de l'élément filtrant soit en contact avec la feuille thermoplastique et la fixation thermique de la surface de l'extrémité de l'élément filtrant à la feuille thermoplastique et la répétition de l'opération pour la surface de l'autre extrémité du filtre.

2. Un procédé suivant la Revendication 1, dans lequel la feuille thermoplastique est composée d'un composant identique ou similaire au composant du manchon de fibres composites de colle thermofusible autoadhésive.

3. Un procédé suivant la Revendication 1, dans lequel le point de fusion de la feuille thermoplastique se situe en dessous du point de fusion des fibres synthétiques thermoplastiques.

4. Un procédé suivant la Revendication 1, dans lequel les fibres synthétiques thermoplastiques sont choisies parmi les fibres de polyoléfines, les fibres de polyamides, les fibres de polyesters, les fibres acryliques et les fibres composites de colles thermofusibles autoadhésives composées de ces fibres.

5. Un procédé suivant la Revendication 1, dans lequel la feuille thermoplastique est composée du même composant que le composant de la fibre synthétique.

6. Un procédé suivant l'une quelconque des Revendications précédentes, dans lequel le film thermoplastique a une épaisseur de 100 µm à 2 mm.

7. Un procédé suivant l'une quelconque des Revendications précédentes, dans lequel le matériau superficiel de décollage est un film de cellophane, une feuille de polytétrafluoroéthylène, une feuille de polyester ou une membrane de silicone.

8. Un procédé suivant la Revendication 1, dans lequel les fibres thermoplastiques sont des fibres composites de colle thermofusible autoadhésive composées de polypropylène et de polyéthylène de faible densité et la feuille thermoplastique est composée de polyéthylène de faible densité.
